# EUROPÄISCHE PATENTSCHRIFT

(11) **EP 3 874 176 B1**
(45) Veröffentlichungstag und Bekanntmachung des Hinweises auf die Patenterteilung: **10.07.2024**
(21) Anmeldenummer: 19786754.2
(22) Anmeldetag: 09.10.2019
(51) Int. Cl.: F16D 65/00, B60T 17/02, B01D 24/46

(54) **BREMSSTAUBPARTIKELFILTER, BREMSSATTEL UND SCHEIBENBREMSANORDNUNG**
BRAKE DUST PARTICLE FILTER, BRAKE CALIPER AND DISK BRAKE ASSEMBLY
FILTRE À PARTICULES DE POUSSIÈRE DE FREIN, ÉTRIER DE FREIN ET ENSEMBLE FREIN À DISQUE

(30) Priorität: 30.10.2018 DE 102018127039
(43) Veröffentlichungstag der Anmeldung: 08.09.2021
(73) Patentinhaber: MANN+HUMMEL GmbH, 71636 Ludwigsburg (DE)
(72) Erfinder: BOCK, Lukas, 74321 Bietigheim-Bissingen (DE); JESSBERGER, Thomas, 71679 Asperg (DE); KÜMMERLING, Volker, 74321 Bietigheim-Bissingen (DE); EVLEKLI, Coskun, 71332 Waiblingen (DE); WELLER, Benedikt, 71711 Kleinbottwar (DE); KRAVANJA, Axel, 73560 Böbingen an der Rems (DE); THÉBAULT, Eric, 71640 Ludwigsburg (DE); BECK, Andreas, 74366 Kirchheim (DE)
(74) Vertreter: Mann + Hummel Intellectual Property
(86) Internationale Anmeldenummer: PCT/EP2019/077324
(87) Internationale Veröffentlichungsnummer: WO 2020/088900

(56) Entgegenhaltungen:
- EP-A1- 3 369 959
- EP-A2- 2 743 533
- WO-A1-2015/199412
- DE-A1- 102006 051 972
- DE-A1- 102016 105 169
- GB-A- 1 176 716
- US-A1- 2012 067 206

## Beschreibung

### Technisches Gebiet

Die Erfindung betrifft einen Bremssattel mit einem Bremsstaubpartikelfilter sowie eine Scheibenbremsanordnung.

### Stand der Technik

Es ist bekannt, Partikel, die durch Bremsabrieb entstehen, mit einem Bremsstaubpartikelfilter aufzufangen und zu entsorgen. Derlei Partikel entstehen durch Reibung zwischen Bremsbelag und Bremsscheibe einer Scheibenbremse. Ein solcher Bremsstaubpartikelfilter ist beispielsweise aus DE 10 2012 016 835 A1 bekannt. Dieser Brems-staubpartikelfilter bedingt jedoch eine Integration in ein Bremssattelgehäuse und eignet sich daher nicht als Nachrüstlösung.

Ein weiterer Bremsstaubpartikelfilter wird in US 8,025,132 B2 offenbart. Dort ist ein am Bremssattel befestigtes Gehäuse vorgesehen, das die Bremsscheibe zumindest teilumfänglich umgibt. Das Gehäuse des Bremsstaubpartikelfilters erstreckt sich ferner ein Stück weit im Umfangsrichtung radial außen über den Bremssattel, um dort enstehende Partikel auffangen zu können. Mit dem Gehäuse ist eine Absaugleitung verbunden, über die aufgefangene Partikel abgesaugt werden können.

Darüber hinaus ist aus DE 10 2016 108 793A eine vollgekapselte Scheibenbremsanordnung bekannt, deren Gehäuse eine Aussparung für den Bremssattel aufweist und die Bremsscheibe ansonsten vollständig umgibt. Ein letztes Beispiel von Bremsstaubpartikelfilter ist aus der EP 3 369 959 A1 bekannt.

Die im Stand der Technik beschriebenen Bremsstaubpartikelfilter haben alle den Nachteil, dass diese - bezogen auf die Rotationsachse der Bremsscheibe - sowohl in Umfangsrichtung als auch in Radialrichtung Bauraum benötigen. Insbesondere Bauraum in radialer Richtung steht häufig nicht zur Verfügung, da immer größere Bremsanlagen verbaut werden, so dass der Ringspalt zwischen Bremssattelmantelfläche und Felgenbett immer kleiner wird.

Zudem eignen sich die aus dem Stand der Technik bekannten Lösungen nicht zur Nachrüstung durch den Endkunden, da ggf. zusätzliche Befestigungspunkte am Bremssattel, Fahrwerksteilen und/oder Achsschenkel geschaffen werden müssen, was dem Laien nicht zumutbar ist.

### Offenbarung der Erfindung

Aufgabe der vorliegenden Erfindung ist es daher, einen Bremssattel mit einem Bremsstaubpartikelfilter zu schaffen, dessen Bremsstaubpartikelfilter einen deutlich reduzierten Bauraumbedarf aufweist als auch besonders einfach, bevorzugt sogar durch einen Endkunden, nachrüstbar ist.

Diese Aufgabe wird durch einen Bremssattel mit den Merkmalen des Patentanspruchs 1, eine Scheibenbremsanordnung mit den Merkmalen des Patentanspruchs 14 und eine Verwendung mit den Merkmalen des Patentanspruchs 16 gelöst.

Der Bremsstaubpartikelfilter des erfindungsgemäßen Bremssattels ist für beliebige Anwendungen von Scheibenbremsen geeignet, sowohl mobile als auch stationäre Anwendungen. Bei den mobilen Anwendungen kann dieser beispielsweise in PKW, LKW, Bussen, Schienenfahrzeugen eingesetzt werden. Stationär beispielsweise bei Wellenbremsen wie sie bei Windkraftanlagen eingesetzt werden.

Positions- und Richtungsangaben wie "oben", "unten" usw. beziehen sich auf den montierten Zustand des Bremsstaubpartikelfilters, d.h. den Montagezustand, wobei sich Zylinderkoordinatenangaben wie "radial", "axial", "umfänglich" usw. auf eine Rotationsrichtung der Bremsscheibe im Montagezustand des Bremsstaubpartikelfilters beziehen.

Der Bremsstaubpartikelfilter des erfindungsgemäßen Bremssattels für eine Scheibenbremsanordnung ist in einer ersten Ausführungsform dazu ausgebildet ist, in einem Montagezustand eine Belagskontrollöffnung des Bremssattels zumindest teilweise passgenau zu verschließen. Bevorzugt verschließt der Bremsstaubpartikelfilter des erfindungsgemäßen Bremssattels ausschließlich die Belagskontrollöffnung und lässt andere Bremssattelöffnungen unbedeckt. In einigen Ausführungsformen lässt sich der Bremsstaubpartikelfilter des erfindungsgemäßen Bremssattels jedoch auch mit anderen Bremsstaubpartikelfiltern kombinieren, um bspw. den Gesamtabscheidegrad an Partikeln noch weiter zu erhöhen.

Eine Vielzahl der gängigen Bremssättel hat eine Belagskontrollöffnung, die es erlaubt, einen Verschleißzustand der Bremsbeläge zu kontrollieren, ohne den Bremssattel demontieren zu müssen. In der Regel liegt eine solche Belagskontrollöffnung an einer Mantelfläche des Bremssattels vor, so dass die Öffnung, bezogen auf die Rotationachse der Bremsscheibe, in Radialrichtung offen ist, so dass der Belagszustand in einer Blickrichtung parallel zu den Reibflächen der Bremsscheibe beurteilt werden kann.

Die Anmelderin hat festgestellt, dass ein nicht unerheblicher Anteil der beim Bremsen entstehenden Partikel durch die Belagskontrollöffnung ausgetragen wird.

Der Bremsstaubpartikelfilter des erfindungsgemäßen Bremssattels erlaubt es nun, diese Partikelemissionsquelle schnell und einfach zu beseitigen, indem die Belagskontrollöffnung von einem Filter verschlossen wird. Dies ist so einfach möglich, dass dies sogar der Endkunde, beispielsweise im Rahmen eines Räderwechsels, selbst vornehmen kann. Zudem ist die erfindungsgemäße Bauweise extrem platzsparend; insbesondere in Radialrichtung ergibt sich ein äußerst geringer Bauraumbedarf. Die Erfindung ist nicht auf eine Anwendung des erfindungsgemäßen Bremsstaubpartikelfilters in der Belagskontrollöffnung beschränkt, sondern ist, in sämtlichen Ausführungen, sinngemäß auch auf andere Sattelöffnungen übertragbar, welche vergleichbare Abmessungen haben.

Bevorzugt ist der Bremsstaubpartikelfilter zumindest bereichsweise fluiddurchströmbar ausgebildet, so dass mit Bremsstaub beladene Luft unter Abscheidung der Bremsstaubpartikel durch diesen hindurch zirkulieren kann.

In einer weiteren Ausführungsform kann der Bremsstaubpartikelfilter in dem Montagezustand zumindest 60%, bevorzugt zumindest 80%, am meisten bevorzugt zumindest 90% der Belagskontrollöffnung verschließen. Mit "verschließen" ist hierin nicht ein "strömungsdicht machen" gemeint, sondern ein Abdecken der Belagskontrollöffnung bezüglich Ihres Querschnitts. Mit "passgenau" ist hierin eine auf die Form und Abmessungen der Belagskontrollöffnung abgestimmte Struktur des Bremsstaubpartikelfilters gemeint, wobei in Abgrenzung hierzu aus dem Stand der Technik bekannte Konzepte von Bremsstaubpartikelfiltern zwar die Belagskontrollöffnung lediglich mit einem Gehäuseendabschnitt mit verschließen.

Gemäß einer bevorzugten Weiterbildung kann der Bremsstaubpartikelfilter zumindest abschnittsweise in die Belagskontrollöffnung einsetzbar sein. Unter "einsetzbar" wird hierin ein zumindest teilweises Versenken des Bremsstaubpartikelfilters unter eine Oberfläche des Bremssattels verstanden, so dass ein Bauraumbedarf, insbesondere in Radialrichtung, hierdurch noch weiter reduziert werden kann. Bevorzugt ragt der Bremsstaubpartikelfilter in Radialrichtung überhaupt nicht über den Bremssattel hinaus, so dass die Integration des Bremsstaubpartikelfilters bauraumneutral möglich ist.

Der Bremsstaubpartikelfilter kann weiter bevorzugt ein Filtermedium aufweisen, welches die Belagskontrollöffnung in dem Montagezustand passgenau verschließt. Durch dieses kann mit Bremsstaub beladene Luft, die durch der Rotation der Bremsscheibe zirkuliert, gefiltert werden, indem sie das Filtermedium durchströmt. Der Bremsstaub wird gemäß dieser Ausführungsform nicht lediglich aufgefangen, sondern gefiltert und im oder an dem Filtermedium gebunden, so dass dieser nicht mehr ausgetragen wird.

Das Filtermedium ist vorzugsweise derart ausgebildet, dass es auch bei einer Temperatur von mehr als 600°C stabil ist, um den Temperaturen in unmittelbarer Umgebung einer Scheibenbremse widerstehen zu können. Das Filtermedium kann dabei ein Metall, insbesondere ein Metallfaservlies, Glas, Keramik und/oder einen hochtemperaturbeständigen Kunststoff, insbesondere Polyetheretherketon, aufweisen. Alternativ hierzu sind auch geschäumte Metalle und/oder Keramiken als Filtermedium möglich. Das Filtermedium kann entweder als biegeschlaffes Flachmaterial oder als biegesteifer Formfilter bereitgestellt werden.

Gemäß einer weiteren ebenfalls bevorzugten Ausführungsform kann der Bremsstaubpartikelfilter einen Filtermediumsträger aufweisen, der zumindest abschnittsweise fluiddurchströmbar ausgebildet ist, bevorzugt mit einer Mehrzahl Durchlassöffnungen versehen ist, die die Durchströmung des Filtermediums ermöglichen. Der Filtermediumsträger ist auf die Form und Abmessungen der Belagskontrollöffnung des Bremssattels abgestimmt und ist in diese einsetzbar. Der Filtermediumsträger hält das Filtermedium im Montagezustand sicher in der Belagskontrollöffnung, so dass dieses auch nicht unter Einwirkung von Vibrationen und Temperaturänderungen heraus fällt.

Der Filtermediumsträger kann bevorzugt aus einem hitzebeständigen Material hergestellt sein, insbesondere aus einem metallischen Werkstoff, insbesondere aus Stahl. Dieser kann bevorzugt ein Blechteil sein, welches mittels zumindest eines Umformverfahrens erhalten werden kann.

Alternativ kann das Filtermedium als Formfilter ausgebildet sein, so dass dieses auch ohne Träger eine hinreichend große Steifigkeit aufweist und daher mit geeigneten Mitteln in der Belagskontrollöffnung direkt aufnehmbar ist.

Gemäß einer Weiterbildung kann der Filtermediumsträger zumindest einen Klemmhaken aufweisen, bevorzugt zumindest drei Klemmhaken, die dazu ausgebildet sind, den Filtermediumsträger in dem Montagezustand in der Belagskontrollöffnung zu halten. Die Klemmhaken haben dabei besonders bevorzugt eine Radialerstreckung, die auf eine Materialdicke des Bremssattels in einem die Belagskontrollöffnung umgebenden Randbereich abgestimmt ist, so dass die Klemmhaken in dem Montagezustand die Belagskontrollöffnung hintergreifen. Die Klemmhaken stellen ferner bevorzugt eine elastische Vorspannung bereit, so dass auch bei starken Temperaturschwankungen, was in der unmittelbaren Umgebung einer Bremse häufig der Fall ist, eine sichere Halterung des Bremsstaubpartikelfilters gewährleistet ist.

Das Filtermedium ist insbesondere auf dem Filtermediumsträger angeordnet, bevorzugt derart, dass dieses im Montagezustand radial innenliegend vorliegt. Der Filtermediumsträger liegt dabei radial außenliegend vor und schützt das Filtermedium vor äußerer mechanischer Einwirkung, etwa durch spitze Gegenstände und/oder beim Einsatz eines Dampfstrahlers.

Besonders bevorzugt kann das Filtermedium mit dem Filtermediumsträger zumindest stellenweise verbunden sein, bevorzugt verschweißt, etwa punktverschweißt.

Darüber hinaus ist in einer ebenfalls bevorzugten Weiterbildung vorgesehen, dass der Filtermediumsträger zumindest einen Radialanschlag aufweist, der bevorzugt als Zunge ausgebildet ist, wobei der Radialanschlag dazu ausgebildet ist, sich in dem Montagezustand an einem Randbereich der Belagskontrollöffnung abzustützen. Durch den Radialanschlag wird eine definierte Einbautiefe hinsichtlich einer Aufnahme des Bremsstaubpartikelfilters in der Belagskontrollöffnung ermöglicht, so dass dieser nicht zu tief eingeschoben werden kann, mit dem Risiko, in Kontakt mit der Bremsscheibe zu geraten.

Schließlich kann der Bremsstaubpartikelfilter zumindest eine sich in Radialrichtung erstreckende Öffnung mit einer vorbestimmten Axialerstreckung aufweisen, insbesondere ein Langloch, wobei durch die Öffnung zumindest ein Anzeigeelement, bevorzugt ein Zeigerelement, geführt ist, welches in einem Montagezustand zur Erfassung einer Bremsbelagsdicke mit zumindest einem Bremsbelag des Bremssattels in Wechselwirkung bringbar ist. Bei einer Ausführungsform mit Filtermedium und Filtermediumsträger durchdringt die Öffnung zweckmäßig sowohl den Filtermediumsträger als auch das Filtermedium. Das Anzeigeelement kann insbesondere als Blechplättchen ausgebildet sein, das sich von außerhalb des Bremsstaubpartikelfilters zumindest soweit nach radial innen erstreckt, dass beispielsweise eine Kolbenposition damit erfassbar ist. Durch das Anzeigeelement wird eben die Kolbenposition, welche direkt mit dem Verschleiß der Beläge korrespondiert, von außen optisch erfassbar wiedergegeben.

Ein erster Aspekt der Erfindung betrifft einen Bremssattel für eine Scheibenbremsanordnung, der zumindest eine sich in Axialrichtung erstreckende Sattelbrücke mit einer darin vorgesehenen Belagskontrollöffnung aufweist. Die Belagskontrollöffnung ist von einem Bremsstaubpartikelfilter passgenau verschlossen ist. Unter Sattelbrücke wird hier die axiale Verbindung zwischen den sich beiderseitig der Bremsscheibe erstreckenden Backen des Bremssattels verstanden, die an dem Bremssattel zur Einleitung der Bremskraft in die Reibbeläge vorgesehen sind. Die Kontrollöffnung ist in der Sattelbrücke vorgesehen, da von dort sowohl der Zustand beider Bremsbeläge, als auch der Zustand einer Kolbenabdichtung eingesehen werden kann.

Zu Wartungszwecken kann der Bremsstaubpartikelfilter des erfindungsgemäßen Bremssattels schnell und einfach mit wenigen Handgriffen aus der Belagskontrollöffnung entnommen werden, woraufhin die Kontrollarbeiten wie gewohnt durchführbar sind. Der Bremsstaubpartikelfilter kann hierfür über eine lösbare Verbindungsanordnung, z.B. Schrauben, mit einem Bremssattelkörper verbunden sein. Alternativ sind auch Ausführungen umfasst, bei welchen der Bremsstaubpartikelfilter nicht zerstörungsfrei lösbar mit dem Bremssattelkörper verbunden ist, etwa verklebt oder verschweißt.

Gemäß einer bevorzugten Weiterbildung ist der Bremsstaubpartikelfilter mit einem Bremssattelkörper des Bremssattels, insbesondere in einem Randbereich der Belagskontrollöffnung, über eine schwenkbare Verbindungsanordnung, insbesondere mit zumindest einem Scharnier, verbunden. Hieraus ergibt sich der Vorteil, dass der Bremsstaubpartikelfilter im Servicefall zur Kontrolle der Bremsbeläge einfach weggeklappt werden kann und nach erfolgter Sichtkontrolle wieder über die Belagskontrollöffnung geklappt wird. Hierdurch wird die Gefahr des Verlierens des Bremsstaubpartikelfilters reduziert und Zeit beim Service eingespart. Die schwenkbare Verbindungsanordnung kann dabei insbesondere an dem Filtermediumsträger angreifen und/oder eine Schwenkachse parallel oder normal zur Rotationsachse der Bremsscheibe haben.

Ein weiterer Aspekt der Erfindung betrifft eine Scheibenbremsanordnung mit zumindest einer Bremsscheibe und einem erfindungsgemäßen Bremssattel mit einem erfindungsgemäßen Bremsstaubpartikelfilter.

Gemäß einer Weiterbildung weist die Scheibenbremsanordnung eine Spritzschutzabdeckung auf, insbesondere ein Spritzschutzblech, welches die Bremsscheibe zumindest teilumfänglich abdeckt, wobei der Bremsstaubpartikelfilter des Bremssattels an der Spritzschutzabdeckung befestigt ist, insbesondere einteilig an diese angeformt ist. Mit "angeformt" sind hierbei sowohl ursprünglich einteilige Bauweisen, wie etwa urgeformte oder umgeformte Bauteile, als auch gefügte Bauweisen, etwa eine Schweißkonstruktion, von Spritzschutzabdeckung und Bremsstaubpartikelfilter gemeint.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Kurze Beschreibung der Zeichnungen

In der Zeichnung zeigen:
- Fig. 1: eine isometrische Ansicht einer erfindungsgemäßen Scheibenbremsanordnung;
- Fig. 2: eine isometrische Explosionsansicht der Scheibenbremsanordnung;
- Fig. 3: eine isometrische Ansicht eines Bremsstaubpartikelfilters eines erfindungsge-mäßen Bremssattels.

### Ausführungsformen der Erfindung

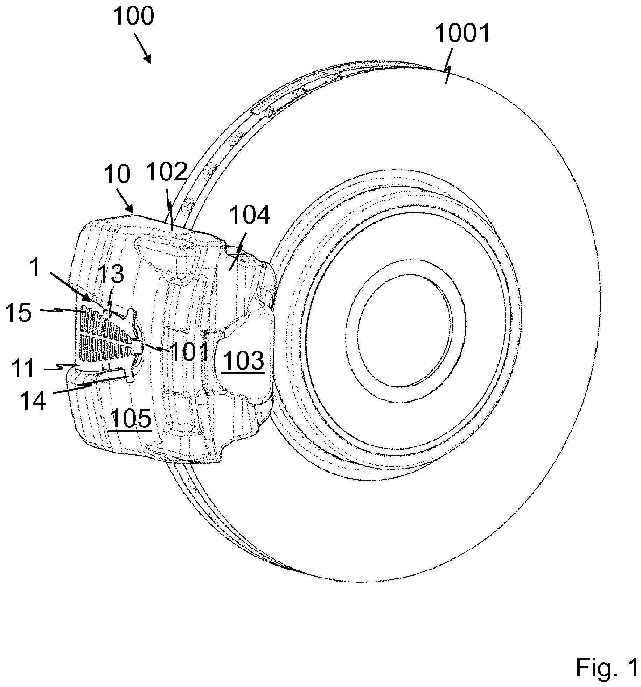

Die erfindungsgemäße Scheibenbremsanordnung 100 ist in Fig. 1 in einer isometrischen Ansicht gezeigt. Diese verfügt über eine Bremsscheibe 1001, die von einem Bremssattel 10, welcher Träger von zwei Reibbelägen 103 ist, umgriffen wird. Die Bremsscheibe 1001 ist auf eine Welle oder einen Achsträger montierbar und kann etwa bei einem Fahrzeug (PKW, NFZ, Schienenfahrzeug) oder an einer stationären Anlage eingesetzt werden. Der Bremssattel 10 verfügt über eine außenliegende Backe 104, die sich parallel zur Reibfläche der Bremsscheibe 1001 erstreckt, wobei über die Backe 104 die Bremskraft auf die Reibbeläge 103 übertragbar ist. An einem in der Zeichnung nicht einsehbaren, axial abgewandten Ende des Bremssattels 10 hat dieser eine zweite, innere Backe. Nach welchem Prinzip der Bremssattel die Bremskraft erzeugt, spielt für die Erfindung keine Rolle; es kann sich bei diesem um einen elektrisch, hydraulisch oder pneumatisch betätigten Bremssattel handeln.

Die äußere Backe 104 und die innere, nicht gezeigte Backe sind zur Kraftübertragung von einer Sattelbrücke 102 verbunden, in der eine Belagskontrollöffnung 101 vorgesehen ist, über die im Servicefall der Verschleißzustand der Reibbeläge 103 einfach und schnell, d.h. ohne Demontage, beurteilt werden kann.

Bei einer konventionellen Scheibenbremsanordnung ist die Belagskontrollöffnung stets unverschlossen, so dass auch ein nicht unerheblicher Anteil des beim Bremsen anfallenden Bremsstaubes durch diese Öffnung in die Umgebung gelangt, was die Anmelderin bei Versuchen ermittelt hat.

Erfindunggemäß ist nun die Belagskontrollöffnung 101 von einem Bremsstaubpartikelfilter 1 verschlossen, der passgenau in diese eingesetzt ist. Der Bremsstaubpartikelfilter 1 ragt in Radialrichtung nicht über die Außenkontur des Bremssattels 10 hinaus, so dass dieser keinen zusätzlichn Bauraum beanprucht. Ferner ist seine Installation sehr einfach und schnell durch einfaches Einsetzen möglich, weshalb dies auch ein Endkunde selbst machen kann.

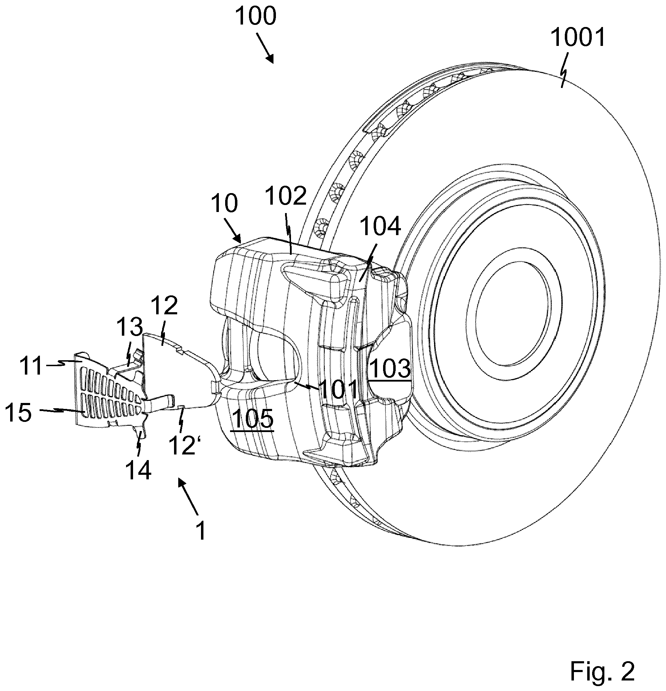

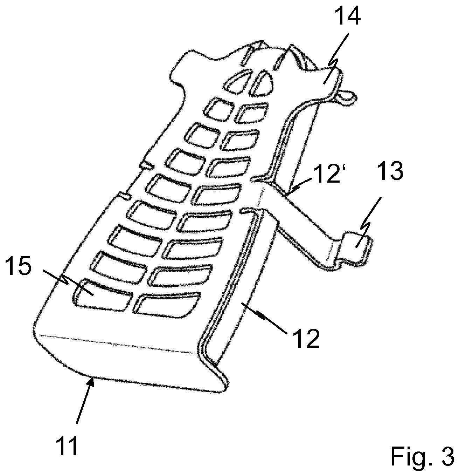

Der Aufbau des Bremsstaubaprtikelfilters 1 selbst ist nun aus **Fig. 2** und **Fig. 3** ersichtlich. Der Bremsstaubpartikelfilter 1 ist gemäß der gezeigten Ausführungsform zweiteilig ausgebildet: Er hat (a) einen Filtermediumsträger 11 und (b) ein Filtermedium 12 welches von dem Filtermediumsträger 11 gehalten wird. Der Filtermediumsträger 11 ist hinsichtlich seiner Form und Abmessungen auf die Belagskontrollöffnung 101 abgestimmt, so dass dieser passend in diese eingesetzt werden kann. Zur Befestigung des Filtermediumsträgers 11 in der Belagskontrollöffnung 101 weist dieser Klemmhaken 13 auf, deren Länge mit der Materialstärke des Bremssattels 10 korrespondiert, wobei die Klemmhaken 13 mit ihrem jeweils abgewinkelten Endabschnitt hinter der Belagskontrollöffnung 101 verrastbar sind. Damit der Bremsstaubpartikelfilter 1 nicht zu weit radial (=Tiefenrichtung) in die Belagskontrollöffnung 101 eingeschoben werden kann sind an dem Filtermediumsträger 11 jeweils abragende Radialanschläge 14, die als Zungen ausgebildet sind, vorgesehen, welche in dem Montagezustand (Fig. 1) auf der Mantelfläche des Bremssattels zur Anlage kommen.

Bei dem Filtermedium 12 handelt es sich im vorliegenden Fall um ein Flachmaterial, beispielsweise ein Metall- oder Keramikvlies, welches auf die Form und Abmessungen des Filtermediumsträger zugeschnitten und mit Ausnehmungen fr die Klemmhaken 13 versehen, mit dem Filtermediumsträger 11 verbunden ist, bspw. verschweißt. In bestimmten Ausführungsformen kann das Medium 12 auch lösbar mit dem Filtermediumsträger 11 verbunden sein, etwa nur kraftschlüssig verklemmt.

Soll der Bremsstaubpartikelfilter 1 ausgetauscht werden, ist dies im Rahmen des regelmäßigen Räderwechsels und/oder bei anderen Wartungsarbeiten an der Bremsanlage schnell und einfach möglich. Bei einer Vollmetallvariante (Filtermedium aus Metall und Filtermediumsträger aus Metall) ist zudem eine problemlose und ressourcenschonende Rezyklierbarkeit gegeben.

### Bezugszeichenliste

- 10: Bremssattel
- 101: Belagskontrollöffnung
- 102: Sattelbrücke
- 103: Reibbeläge
- 104: Außenbacke
- 105: Mantelfläche
- 100: Scheibenbremsanordnung
- 1001: Bremsscheibe
- 1: Bremsstaubpartikelfilter
- 11: Filtermediumsträger
- 12: Filtermedium
- 12`: Aussparungen des Filtermediums für Klemmhaken
- 13: Klemmhaken
- 14: Radialanschlag
- 15: Durchlassöffnungen

## Patentansprüche

1. Bremssattel (10) für eine Scheibenbremsanordnung (100), der zumindest eine sich in Axialrichtung erstreckende Sattelbrücke (102) mit einer darin vorgesehenen Belagskontrollöffnung (101) aufweist, **dadurch gekennzeichnet, dass** die Belagskontrollöffnung (101) von einem Bremsstaubpartikelfilter (1) zumindest teilweise passgenau verschlossen ist, der dazu ausgebildet ist, in einem Montagezustand die Belagskontrollöffnung (101) zumindest teilweise passgenau zu verschließen.

2. Bremssattel (10) nach Anspruch 1, **dadurch gekennzeichnet, dass** der Bremsstaubpartikelfilter (1) zumindest bereichsweise fluiddurchströmbar ausgebildet ist.

3. Bremssattel (10) nach Anspruch 1 oder 2, **dadurch gekennzeichnet, dass** der Bremsstaubpartikelfilter (1) in dem Montagezustand zumindest 60%, bevorzugt zumindest 80%, am meisten bevorzugt zumindest 90 % der Belagskontrollöffnung verschließt.

4. Bremssattel (10) nach einem der Ansprüche 1 bis 3, **dadurch gekennzeichnet, dass** der Bremsstaubpartikelfilter (1) zumindest abschnittsweise in die Belagskontrollöffnung (101) einsetzbar ist.

5. Bremssattel (10) nach einem der Ansprüche 1 bis 4, **dadurch gekennzeichnet, dass** der Bremsstaubpartikelfilter (1) ein Filtermedium (12) aufweist, welches die Belagskontrollöffnung (101) in dem Montagezustand zumindest teilweise passgenau verschließt.

6. Bremssattel (10) nach einem der vorigen Ansprüche, **dadurch gekennzeichnet, dass** Bremsstaubpartikelfilter (1) einen Filtermediumsträger (11) aufweist, der zumindest abschnittsweise fluiddurchströmbar ausgebildet ist, bevorzugt eine Mehrzahl Durchlassöffnungen (15) aufweist, wobei der Filtermediumsträger (11) auf die Form und Abmessungen der Belagskontrollöffnung (101) abgestimmt und in diese einsetzbar ist.

7. Bremssattel (10) nach Anspruch 6, **dadurch gekennzeichnet, dass** der Filtermediumsträger (11) zumindest einen Klemmhaken (13) aufweist, bevorzugt zumindest drei Klemmhaken (13), die dazu ausgebildet sind, den Filtermediumsträger (11) in dem Montagezustand in der Belagskontrollöffnung (101) zu halten, wobei besonders bevorzugt eine Radialerstreckung der Klemmhaken (13) auf eine Materialdicke des Bremssattels (10) in einem die Belagskontrollöffnung (101) umgebenden Randbereich abgestimmt ist, so dass die Klemmhaken (13) in dem Montagezustand die Belagskontrollöffnung (101) hintergreifen.

8. Bremssattel (10) nach Anspruch 6 oder 7, **dadurch gekennzeichnet, dass** das Filtermedium (12) auf dem Filtermediumsträger (11) angeordnet ist, wobei bevorzugt das Filtermedium (12) in dem Montagezustand radial innenliegend vorliegt.

9. Bremssattel (10) nach Anspruch 8, **dadurch gekennzeichnet, dass** das Filtermedium (12) mit dem Filtermediumsträger (11) zumindest stellenweise verbunden ist, bevorzugt verschweißt.

10. Bremssattel (10) nach einem der Ansprüche 6 bis 9, **dadurch gekennzeichnet, dass** der Filtermediumsträger (11) zumindest einen Anschlag, insbesondere einen Radialanschlag (14), aufweist, der bevorzugt als Zunge (14) ausgebildet ist, wobei der Anschlag, insbesondere der Radialanschlag (14), dazu ausgebildet ist, sich in dem Montagezustand an dem Bremssattel (10), insbesondere an einem Randbereich der Belagskontrollöffnung (101), abzustützen.

11. Bremssattel (10) nach einem der Ansprüche 6 bis 10, **dadurch gekennzeichnet, dass** das Filtermedium (12) ein hitzebeständiges Material aufweist oder daraus besteht, bevorzugt ein Metall, insbesondere ein Metallfaservlies, Glas, Keramik und/oder einen hochtemperaturbeständiger Kunststoff, insbesondere Polyetheretherketon.

12. Bremssattel (10) nach einem der Ansprüche 6 bis 11, **dadurch gekennzeichnet, dass** der Bremsstaubpartikelfilter (1) zumindest eine sich in Radialrichtung erstreckende Öffnung mit einer vorbestimmten Axialerstreckung aufweist, insbesondere ein Langloch, wobei durch die Öffnung zumindest ein Anzeigeelement, bevorzugt ein Zeigerelement, führbar ist, welches in einem Montagezustand zur Erfassung einer Bremsbelagsdicke mit zumindest einem Bremsbelag des Bremssattels in Wechselwirkung bringbar ist.

13. Bremssattel (10) nach zumindest einem der vorigen Ansprüche, **dadurch gekennzeichnet, dass** der Bremsstaubpartikelfilter (1) mit einem Bremssattelkörper, insbesondere in einem Randbereich der Belagskontrollöffnung (101), über eine schwenkbare Verbindungsanordnung, insbesondere mit zumindest einem Scharnier, verbunden ist.

14. Scheibenbremsanordnung (100) mit zumindest einer Bremsscheibe (1001) und einem Bremssattel, **dadurch gekennzeichnet, dass** der Bremssattel ein Bremssattel (10) nach zumindest einem der Ansprüche 1 bis 13 ist.

15. Scheibenbremsanordnung (100) nach Anspruch 14, **dadurch gekennzeichnet, dass** die Scheibenbremsanordnung (100) eine Spritzschutzabdeckung aufweist, insbesondere ein Spritzschutzblech, welches die Bremsscheibe zumindest teilumfänglich abdeckt, wobei der Bremsstaubpartikelfilter (1) des Bremssattels (10) an der Spritzschutzabdeckung befestigt ist, insbesondere einteilig an diese angeformt ist.

16. Verwendung eines Bremsstaubpartikelfilters (1) in einem Bremssattel (10), wobei der Bremssattel (10) eine sich in Axialrichtung erstreckende Sattelbrücke (102) mit einer darin vorgesehenen Belagskontrollöffnung (101) aufweist, und wobei der Bremsstaubpartikelfilter (1) die Belagskontrollöffnung (101) in einem Montagezustand zumindest teilweise passgenau verschließt.

## Claims

1. A brake caliper (10) for a disc brake assembly (100) featuring at least one caliper bridge (102) extending in the axial direction and having a pad inspection opening (101) provided therein, **characterized in that** the pad inspection opening (101) is at least partially precisely closed by a brake dust particle filter (1) which is designed to at least partially precisely close the pad inspection opening (101) in an assembled state.

2. The brake caliper (10) according to claim 1, **characterized in that** the brake dust particle filter (1) is designed so that fluid can flow through it at least in some areas.

3. The brake caliper (10) according to claim 1 or 2, **characterized in that** the brake dust particle filter (1), in the assembled state, closes at least 60%, preferably at least 80%, most preferably at least 90% of the pad inspection opening.

4. The brake caliper (10) according to one of the claims 1 to 3, **characterized in that** the brake dust particle filter (1) is insertable at least section-wise into the pad inspection opening (101).

5. The brake caliper (10) according to one of the claims 1 to 4, **characterized in that** the brake dust particle filter (1) features a filter medium (12) which at least partially precisely closes the pad inspection opening (101) in the assembled state.

6. The brake caliper (10) according to one of the preceding claims, **characterized in that** the brake dust particle filter (1) features a filter medium carrier (11) which is designed in such a way that fluid can flow through it at least section-wise, preferably featuring a plurality of passage openings (15), wherein the filter medium carrier (11) is adapted to the shape and dimensions of the pad inspection opening (101) and is insertable into it.

7. The brake caliper (10) according to claim 6, **characterized in that** the filter medium carrier (11) features at least one clamping hook (13), preferably at least three clamping hooks (13) designed to retain the filter medium carrier (11), in the assembled state, in the pad inspection opening (101), wherein preferably a radial extension of the clamping hooks (13) is particularly adapted to a material thickness of the brake caliper (10) in an edge region surrounding the pad inspection opening (101), so that the clamping hooks (13) engage behind the pad inspection opening (101) in the assembled state.

8. The brake caliper (10) according to claim 6 or 7, **characterized in that** the filter medium (12) is disposed on the filter medium carrier (11), wherein preferably the filter medium (12), in the assembled state, is present radially inside-lying.

9. The brake caliper (10) according to claim 8, **characterized in that** the filter medium (12) is connected to the filter medium carrier (11) at least section-wise, preferably welded.

10. The brake caliper (10) according to one of the claims 6 to 9, **characterized in that** the filter medium carrier (11) features at least one stop, in particular a radial stop (14), which is preferably designed as a tongue (14), wherein the stop, in particular the radial stop (14), is designed, in the assembled state, to rest on the brake caliper (10), in particular on an edge region of the pad inspection opening (101).

11. The brake caliper (10) according to one of the claims 6 to 10, **characterized in that** the filter medium (12) features or consists of a heat-resistant material, preferably a metal, in particular a metal fiber fleece, glass, ceramic and/or a high-temperature-resistant plastic material, in particular polyetheretherketone.

12. The brake caliper (10) according to one of the claims 6 to 11, **characterized in that** the brake dust particle filter (1) features at least one opening extending in the radial direction having a predetermined axial extension, in particular a long hole, wherein at least one indicator element, preferably a pointer element, can be guided through the opening, said indicator element being able, in an assembled state, to be brought into interaction with at least one brake pad of the brake caliper in order to detect a brake pad thickness.

13. The brake caliper (10) according to at least one of the preceding claims, **characterized in that** the brake dust particle filter (1) is connected to a brake caliper body, in particular in a peripheral area of the pad inspection opening (101), via a pivotable connection arrangement, in particular with at least one hinge.

14. A disc brake assembly (100) having at least one brake disc (1001) and a brake caliper, **characterized in that** the brake caliper is a brake caliper (10) according to at least one of claims 1 to 13.

15. The disc brake assembly (100) according to claim 14, **characterized in that** the disc brake assembly (100) features a splash guard cover, in particular a splash guard plate, which covers the brake disc at least partially, wherein the brake dust particle filter (1) of the brake caliper (10) is attached to the splash guard cover, in particular is molded onto it in one piece.

16. A use of a brake dust particle filter (1) in a brake caliper (10), wherein the brake caliper (10) features a caliper bridge (102) extending in the axial direction with a pad inspection opening (101) provided therein, and wherein the brake dust particle filter (1) at least partially precisely closes the pad inspection opening (101) in an assembled state.

## Revendications

1. Étrier de frein (10) pour un agencement de frein à disque (100) présentant au moins un pont d'étrier (102) s'étendant dans la direction axiale avec une ouverture de contrôle de garniture (101) prévue dans celui-ci, **caractérisé en ce que** l'ouverture de contrôle de garniture (101) est obturée au moins partiellement de manière parfaitement ajustée par un filtre à particules de poussière de frein (1) conçu pour obturer au moins partiellement de manière parfaitement ajustée l'ouverture de contrôle de garniture (101) à l'état monté.

2. Étrier de frein (10) selon la revendication 1, **caractérisé en ce que** le filtre à particules de poussière de frein (1) est réalisé de manière à pouvoir être traversé par un fluide au moins dans certaines sections.

3. Étrier de frein (10) selon la revendication 1 ou 2, **caractérisé en ce que** le filtre à particules de poussière de frein (1), à l'état monté, obture au moins 60%, de préférence au moins 80%, le plus préférablement au moins 90% de l'ouverture de contrôle de garniture.

4. Étrier de frein (10) selon l'une quelconque des revendications 1 à 3, **caractérisé en ce que** le filtre à particules de poussière de frein (1) peut être inséré au moins par sections dans l'ouverture de contrôle de garnitures (101).

5. Étrier de frein (10) selon l'une quelconque des revendications 1 à 4, **caractérisé en ce que** le filtre à particules de poussière de frein (1) présente un milieu filtrant (12) qui obture au moins partiellement de manière parfaitement ajustée l'ouverture de contrôle de garniture (101) à l'état monté.

6. Étrier de frein (10) selon l'une quelconque des revendications précédentes, **caractérisé en ce que** le filtre à particules de poussière de frein (1) présente un support de milieu filtrant (11) réalisé de manière à pouvoir être traversé par un fluide au moins par sections, de préférence présente une pluralité d'ouvertures de passage (15), le support de milieu filtrant (11) étant adapté à la forme et aux dimensions de l'ouverture de contrôle de garniture (101) et pouvant être inséré dans celle-ci.

7. Étrier de frein (10) selon la revendication 6, **caractérisé en ce que** le support de milieu filtrant (11) présente au moins un crochet de serrage (13), de préférence au moins trois crochets de serrage (13) conçus pour maintenir le support de milieu filtrant(11), à l'état monté, dans l'ouverture de contrôle de garniture (101), de préférence, une extension radiale des crochets de serrage (13) étant particulièrement adaptée à une épaisseur de matériau de l'étrier de frein (10) dans une zone périphérique entourant l'ouverture de contrôle de garniture (101), de sorte que les crochets de serrage (13) s'engagent derrière l'ouverture de contrôle de garniture (101) à l'état monté.

8. Étrier de frein (10) selon la revendication 6 ou 7, **caractérisé en ce que** le milieu filtrant (12) est disposé sur le support de milieu filtrant (11), de préférence le milieu filtrant (12), à l'état monté, se trouvant radialement à l'intérieur.

9. Étrier de frein (10) selon la revendication 8, **caractérisé en ce que** le milieu filtrant (12) est relié au moins par endroits au support de milieu filtrant (11), de préférence par soudage.

10. Étrier de frein (10) selon l'une quelconque des revendications 6 à 9, **caractérisé en ce que** le support de milieu filtrant (11) présente au moins une butée, notamment une butée radiale (14), qui est de préférence réalisée sous la forme d'une languette (14), la butée, notamment la butée radiale (14), étant conçue pour s'appuyer, à l'état monté, sur l'étrier de frein (10), notamment sur une zone périphérique de l'ouverture de contrôle de garniture (101).

11. Étrier de frein (10) selon l'une quelconque des revendications 6 à 10, **caractérisé en ce que** le milieu filtrant (12) présente un ou est constitué d'un matériau résistant à la chaleur, de préférence un métal, notamment un non-tissé de fibres métalliques, du verre, de la céramique et/ou une matière plastique résistant aux températures élevées, notamment du polyéther-éthercétone.

12. Étrier de frein (10) selon l'une quelconque des revendications 6 à 11, **caractérisé en ce que** le filtre à particules de poussière de frein (1) présente au moins une ouverture s'étendant dans la direction radiale ayant une extension axiale prédéterminée, notamment un trou oblong, au moins un élément indicateur, de préférence un élément pointeur, pouvant être guidé à travers l'ouverture, l'élément indicateur pouvant être amené, à l'état monté, en interaction avec au moins une garniture de frein de l'étrier de frein pour détecter une épaisseur de garniture de frein.

13. Étrier de frein (10) selon au moins l'une quelconque des revendications précédentes, **caractérisé en ce que** le filtre à particules de poussière de frein (1) est relié à un corps d'étrier de frein, notamment dans une zone périphérique de l'ouverture de contrôle de garniture (101), par un agencement de raccordement pivotant, notamment avec au moins une charnière.

14. Agencement de frein à disque (100) ayant au moins un disque de frein (1001) et un étrier de frein, **caractérisé en ce que** l'étrier de frein est un étrier de frein (10) selon au moins l'une quelconque des revendications 1 à 13.

15. Agencement de frein à disque (100) selon la revendication 14, **caractérisé en ce que** l'agencement de frein à disque (100) présente un couvercle anti-éclaboussures, notamment une tôle anti-éclaboussures qui recouvre au moins partiellement le disque de frein, le filtre à particules de poussière de frein (1) de l'étrier de frein (10) étant fixé sur le couvercle anti-éclaboussures, notamment moulé d'un seul tenant sur celui-ci.

16. Utilisation d'un filtre à particules de poussière de frein (1) dans un étrier de frein (10), l'étrier de frein (10) présentant un pont d'étrier (102) s'étendant dans la direction axiale avec une ouverture de contrôle de garniture (101) prévue dans celui-ci, et le filtre à particules de poussière de frein (1) obturant au moins partiellement, à l'état monté, de manière parfaitement ajustée l'ouverture de contrôle de garniture (101).
